# EUROPÄISCHE PATENTANMELDUNG

(11) **EP 3 572 665 A1**
(43) Veröffentlichungstag der Anmeldung: **27.11.2019**
(21) Anmeldenummer: 19176461.2
(22) Anmeldetag: 24.05.2019
(51) Int. Cl.: F02N 11/08, B60P 1/00, F02D 41/22

(54) **LEERLAUFABSCHALTAUTOMATIK FÜR ARBEITSFAHRZEUGE**

(30) Priorität: 25.05.2018 DE 102018112569
(71) Anmelder: Wacker Neuson Linz GmbH, 4063 Hörsching (AT)
(72) Erfinder: MITTERMAYR, Thomas, 4063 Hörsching (AT); SCHATZ, Bettina, 4063 Hörsching (AT)
(74) Vertreter: Müller Hoffmann & Partner

(57) **Zusammenfassung**

Ein Arbeitsfahrzeug weist einen Motor (3) zum Antreiben eines Hydraulikkreislaufs mit wenigstens einem zuschaltbaren Leistungsverbraucher sowie eine Motorsteuerung (1) zum Steuern des Motors (3) auf. Ferner ist eine Abschaltsteuerung (2) vorgesehen, die ausgebildet ist zum Erzeugen eines Abschaltsignals (16), wenn eine Abschaltbedingung erfüllt ist, und zum Führen des Abschaltsignals (16) an die Motorsteuerung (1), zum Abschalten des Motors (3). Die Abschaltbedingung ist erfüllt, wenn die folgenden Einzelbedingungen erfüllt sind:
- Stillstand des Arbeitsfahrzeugs während eines vorgegebenen Inaktivitätszeitraums; und
- Stellung des Fahrpedals in einer Ausgangsstellung während eines Inaktivitätszeitraums.

## Beschreibung

Die Erfindung betrifft ein Arbeitsfahrzeug mit einer Leerlaufabschaltautomatik.

Arbeitsfahrzeuge, wie zum Beispiel Radlader, Bagger oder Muldenfahrzeuge (Dumper) werden häufig im Leerlauf betrieben, während der Fahrer andere Tätigkeiten verrichtet oder warten muss, bis er losfahren kann. In der Regel wird der Motor dabei nicht abgeschaltet, sondern läuft auch über längere Zeiträume im Leerlauf. Ein unnötig hoher Kraftstoffverbrauch sowie unerwünschte Schadstoffemissionen sind die Folge.

Aus der EP 3 121 438 A1 ist eine automatische Leerlaufabschaltung für ein Fahrzeug bekannt, bei der mittels eines Sitzsensors erkannt wird, ob der Fahrer auf dem Fahrersitz sitzt. Wenn der Fahrer den Sitz verlassen hat und der Motor im Leerlauf läuft, wird der Motor automatisch abgeschaltet. Dadurch ist es nicht erforderlich, dass der Fahrer selbst aktiv wird und den Motor bei Nichtgebrauch aktiv abschaltet.

Jedoch wurden häufig Betriebszustände beobachtet, bei denen der Fahrer zwar auf dem Fahrersitz sitzenbleibt, die Maschine aber dennoch über längere Zeit im Leerlauf betrieben wird, während der Fahrer zum Beispiel auf eine Beladung des Fahrzeugs oder auf die Beendigung anderer Arbeitsgänge warten muss. Auch in diesem Fall werden unnötig Kraftstoff verbraucht und Schadstoffe ausgestoßen.

Der Erfindung liegt die Aufgabe zugrunde, ein Arbeitsfahrzeug anzugeben, mit dem ein unnötiger Leerlaufbetrieb seines Antriebsmotors vermieden werden kann.

Die Aufgabe wird erfindungsgemäß durch ein Arbeitsfahrzeug mit den Merkmalen von Anspruch 1 gelöst. Ein entsprechendes Betriebsverfahren wird in dem nebengeordneten Anspruch angegeben. Vorteilhafte Ausgestaltungen lassen sich den abhängigen Ansprüchen entnehmen.

Es wird ein Arbeitsfahrzeug angegeben, mit einem Motor zum Antreiben eines Hydraulikkreislaufs mit wenigstens einem zuschaltbaren Leistungsverbraucher, einer Motorsteuerung zum Steuern des Motors und mit einer Abschaltsteuerung, wobei die Abschaltsteuerung ausgebildet ist zum Erzeugen eines Abschaltsignals, wenn eine Abschaltbedingung erfüllt ist, und zum Führen des Abschaltsignals an die Motorsteuerung, zum - insbesondere automatischen - Abschalten des Motors, wobei die Abschaltbedingung erfüllt ist, wenn die folgenden Einzelbedingungen erfüllt sind: Stillstand des Arbeitsfahrzeugs während eines vorgegebenen Inaktivitätszeitraums sowie Stellung des Fahrpedals in einer Ausgangsstellung während eines Inaktivitätszeitraums.

Als Arbeitsfahrzeug eignet sich insbesondere ein Dumper, ein Radlader oder ein Bagger. Bei dem Motor handelt es sich üblicherweise um einen Dieselmotor, wobei auch andere Verbrennungsmotoren erfasst sein können.

Der Motor kann in an sich bekannter Weise einen Hydraulikkreislauf betreiben, in dem eine hydraulische Last als Leistungsverbraucher zugeschaltet werden kann. Bei dem Leistungsverbraucher kann es sich in üblicher Weise um einen hydraulischen Fahrantrieb handeln. Ebenso können Arbeitsbewegungen des Arbeitsfahrzeugs, wie zum Beispiel die Bewegung eines Arbeitsarms, eines Löffels oder auch einer Hebeeinrichtung für eine Mulde betrieben werden.

Die Abschaltsteuerung wertet die verschiedenen Einzelbedingungen aus. Wenn die genannten Einzelbedingungen sämtlich (beide) erfüllt sind, stellt die Abschaltsteuerung die Erfüllung der Abschaltbedingung fest und erzeugt das Abschaltsignal und liefert es an die Motorsteuerung, um den Motor abzuschalten. Die Abschaltbedingung fasst somit die Zustände der Einzelbedingungen zusammen. Nur dann, wenn alle vorgegebenen Einzelbedingungen erfüllt sind, ist die Abschaltbedingung erfüllt.

Die die Erfüllung der Einzelbedingungen auswertende Abschaltsteuerung ermöglicht somit eine Leerlaufabschaltautomatik, bei der der Motor in bestimmten Betriebszuständen automatisch abgeschaltet werden kann.

Eine der Einzelbedingungen ist der Stillstand des Arbeitsfahrzeugs während eines vorgegebenen Inaktivitätszeitraums. Der Stillstand des Arbeitsfahrzeugs kann in geeigneter Weise festgestellt werden. Zum Beispiel ist es möglich, anhand der Drehung eines oder mehrerer Räder festzustellen, ob sich das Arbeitsfahrzeug bewegt oder nicht. Ebenso ist eine GPS-Überwachung möglich, bei der anhand einer präzisen Auswertung der GPS-Daten festgestellt werden kann, ob das Arbeitsfahrzeug stillsteht oder sich in Bewegung befindet. Ebenso kann eine Beschleunigungseinwirkung auf das Fahrzeug ausgewertet werden, um daraus Rückschlüsse auf eine Fahrbewegung des Arbeitsfahrzeugs zu schließen. Für die Geschwindigkeitsmessung können entsprechende Sensoren oder Messaufnehmer vorgesehen sein.

Zur Erfüllung dieser Einzelbedingung ist es erforderlich, dass der Stillstand des Arbeitsfahrzeugs über einen vorgegebenen Inaktivitätszeitraum (Stillstand-Inaktivitätszeitraum) festgestellt wird. Je nach Ausgestaltung kann dieser Zeitraum zum Beispiel einige Minuten, zum Beispiel drei Minuten, betragen. Die Dauer des Inaktivitätszeitraums kann hersteller- bzw. werksseitig oder auch vom Benutzer entsprechend der gewünschten Gegebenheiten eingestellt werden.

Wenn während des gesamten Inaktivitätszeitraums der Stillstand des Arbeitsfahrzeugs festgestellt wird, gilt diese Einzelbedingung als erfüllt.

Für die Erfüllung der zweiten Einzelbedingung ist es erforderlich, dass das Fahrpedal während eines Inaktivitätszeitraums (Pedal-Inaktivitätszeitraum) in seiner Ausgangsstellung steht. Mithilfe des Fahrpedals kann der Fahrer des Arbeitsfahrzeugs in üblicher Weise die Motordrehzahl und damit die Leistungsabgabe des Motors beeinflussen. Insbesondere kann er über das Fahrpedal (Gaspedal) die Fahrgeschwindigkeit regeln.

Wenn der Bediener somit über einen längeren Zeitraum (Pedal-Inaktivitätszeitraum) das Fahrpedal nicht betätigt, verbleit es während dieses Zeitraums in seiner Ausgangsstellung, so dass die Einzelbedingung erfüllt ist.

Der Pedal-Inaktivitätszeitraum kann von dem Stillstand-Inaktivitätszeitraum abweichen. Ebenso ist es aber auch möglich, einen einheitlichen Inaktivitätszeitraum festzulegen.

Zur Feststellung der Einzelbedingungen können geeignete Sensoren vorgesehen sein. Zum Beispiel kann das Signal eines Drehzahlmessers auch von der Abschaltsteuerung abgegriffen werden, um daraus Rückschlüsse auf einen Stillstand des Arbeitsfahrzeugs zu ziehen. Ebenso können an einem oder mehreren der Räder berührungslose Messaufnehmer bzw. Kontakte vorgesehen sein, die eine Drehung der Räder detektieren. Ein entsprechender Sensor kann auch die Stellung des Fahrpedals feststellen.

Die Abschaltsteuerung kann auch derart ausgebildet sein, dass zum Erfüllen der Abschaltbedingung zusätzlich zu den beiden oben genannten Einzelbedingungen noch wenigstens eine weitere der folgenden Einzelbedingungen erfüllt sein muss. Bei einigen oder mehreren der Einzelbedingungen kann es sinnvoll sein, dass die jeweiligen Kriterien über einen gewissen Zeitraum (entsprechend den oben erörterten Inaktivitätszeiträumen) gegeben sein müssen.
- Motordrehzahl gleich oder unterhalb einer vorgegebenen Leerlaufdrehzahl. Die Leerlaufdrehzahl kann ab Werk oder auch vom Benutzer vorgegeben werden und bildet einen entsprechenden Grenzwert, gegenüber dem eine Inaktivität erkannt werden kann.
- Hydraulische Last im Hydraulikkreislauf liegt unterhalb eines vorgebbaren Grenzwertes.
   Der Motor treibt üblicherweise eine Hydraulikpumpe an, die ihrerseits den Hydraulikkreislauf betreibt. Wenn keine hydraulische Last angefordert wird, also kein Leistungsverbraucher betrieben wird, wird die hydraulische Last unterhalb des Grenzwertes liegen. Für den hierfür in der Praxis oft maßgeblichen "Loadfaktor" kann z.B. ein Grenzwert von 70% bis 80% sinnvoll sein, wobei der Grenzwert einstellbar sein kann.
- Keine hydraulische Last bzw. kein Leistungsverbraucher im Hydraulikkreislauf zugeschaltet.
   Die Zuschaltung eines Leistungsverbrauchers kann zum Beispiel über Ventile erfolgen, deren Betätigung bzw. Schaltung ausgewertet werden kann. Wenn kein Leistungsverbraucher zugeschaltet ist, kann das System davon ausgehen, dass derzeit keine Arbeit von dem Arbeitsfahrzeug verrichtet werden soll.
- Kühlwassertemperatur des Motors liegt oberhalb eines vorgegebenen Grenzwertes.
   Solange der Motor (noch) nicht die erforderliche Betriebstemperatur erreicht hat, soll ein Abschalten vermieden werden. Dadurch kann erreicht werden, dass der Motor nur dann abgeschaltet wird, wenn er im Übrigen voll betriebsfähig ist, also die vorgesehene Arbeitstemperatur erreicht hat. Als Grenzwert für die Kühlwassertemperatur kann z.B. 50 oder 60 °C gesetzt werden.
- Umgebungstemperatur liegt oberhalb eines vorgegebenen Grenzwertes. Bei niedrigen Umgebungstemperaturen besteht das Problem, dass der Motor unter Umständen sehr schnell wieder abkühlt. In diesem Fall kann es daher unerwünscht sein, den Motor bei kurzzeitiger Inaktivität abzuschalten. Ein sinnvoller Grenzwert für die Umgebungstemperatur kann z.B. bei 5 °C sein.
- Motor befindet sich nicht in einem Regenerationsmodus für ein Abgas-Partikelfilter.
   Moderne Dieselmotoren weisen in der Regel ein Abgas-Partikelfilter im Abgasstrang auf, welches regelmäßig regeneriert werden muss. Für die Regeneration ist es erforderlich, dass eine gewisse Betriebstemperatur erreicht wird. Die Regeneration erfolgt regelmäßig in Abhängigkeit von den Betriebsstunden. Ein Unterbrechen des Regenerationsvorgangs ist unerwünscht, daher sollte der Motor in dieser Phase nicht abgeschaltet werden.
- Batteriespannung einer Starterbatterie für den Motor liegt während eines vorgegebenen Zeitraums oberhalb eines vorgegebenen Grenzwertes.

   Sofern die Batteriespannung unterhalb des Grenzwertes liegt, ist es von Vorteil, wenn die Batterie durch den laufenden Motor aufgeladen wird. Erst dann, wenn die Batterie (weitgehend) voll aufgeladen ist, kann ein Abschalten des Motors sinnvoll sein. Um kurzzeitige Schwankungen aufgrund von Lastwechseln zu vermeiden, sollte der Zustand der Batteriespannung über den vorgegebenen Zeitraum überwacht werden.
- Eine von einem Bediener betätigbare Handbremse ist eingelegt.
   In jedem Fall sollte ein unerwünschtes Wegrollen des Arbeitsfahrzeugs verhindert werden, wenn der Motor abgeschaltet wird. Daher kann es vorteilhaft sein, die Stellung der vom Bediener zu betätigenden Handbremse zu überwachen. Nur dann, wenn die Handbremse eingelegt ist und damit ein Wegrollen des Fahrzeugs verhindert wird, kann der Motor abgeschaltet werden.
- Das Fahrpedal ist nicht betätigt.
   In diesem Fall wird die oben genannte Einzelbedingung, dass das Fahrpedal während eines Inaktivitätszeitraums in einer Ausgangsstellung steht, dahingehend weiter entwickelt, dass eine Betätigung des Fahrpedals überwacht wird. Das kann z.B. auch durch einen Berührungssensor erfolgen, der einen Kontakt des Fußes des Bedieners mit dem Fahrpedal detektiert, ohne dass das Fahrpedal bewegt wird.
- Die Anzahl der automatischen Abschaltungen des Motors innerhalb eines vorgegebenen Zeitraums liegt unterhalb einer vorgegebenen Grenze.
   Ein zu häufiges Abschalten könnte unerwünscht sein und würde gegebenenfalls den Motor oder die Starterbatterie unnötig belasten. Daher kann die Anzahl der automatischen Abschaltungen überwacht und in Relation zu einem Überwachungszeitraum gesetzt werden. Die Motorabschaltung erfolgt nur dann, wenn sie im Gesamtbild noch sinnvoll ist.

Das Vorliegen des Abschaltsignals und das Abschalten des Motors sollte keine Wirkung auf wenigstens eine der folgenden Einrichtungen haben: Drehlichteinrichtung, Standlichteinrichtung, akustische Signaleinrichtung (Hupe), Warnblinkeinrichtung. Die Funktion dieser genannten Einrichtungen muss auch dann gegeben sein, wenn der Motor abgeschaltet ist. Daher darf die Abschaltung des Motors keinen Einfluss auf diese Funktionen haben.

Es kann eine Deaktivierungseinrichtung vorgesehen sein, zum Unterbrechen oder Verhindern des Abschaltsignals auch dann, wenn die Abschaltbedingung erfüllt ist. Mit Hilfe der Deaktivierungseinrichtung hat der Bediener die Möglichkeit, die Leerlaufabschaltautomatik zu deaktivieren. In diesem Fall wird der Motor auch dann weiterbetrieben, wenn die entsprechend definierte Abschaltbedingung erfüllt ist. Der Bediener hat somit die Wahl, ob er die Abschaltautomatik nutzen möchte oder nicht. Über die Deaktivierungseinrichtung kann der Bediener umgekehrt die Leerlaufabschaltautomatik auch wieder aktivieren.

Es kann eine Parkbremseinrichtung vorgesehen sein, zum Bremsen des Arbeitsfahrzeugs im Stillstand, wobei die Abschaltsteuerung ausgebildet ist, um bei Erfüllung der Abschaltbedingung die Parkbremse automatisch zu aktivieren. Damit kann erreicht werden, dass die Abschaltsteuerung nicht nur den Motor abschaltet, sondern auch einen sicheren Zustand des Arbeitsfahrzeugs herbeiführt. Insbesondere kann durch Aktivierung der Parkbremseinrichtung ein unerwünschtes Losrollen des Arbeitsfahrzeugs verhindert werden.

Es kann eine Leistungsverbraucher-Freigabeeinrichtung vorgesehen sein, zum Freigeben einer Aktivierung des Leistungsverbrauchers, wobei bei Erfüllung der Abschaltbedingung ein Freigeben der Aktivierung des Leistungsverbrauchers durch die Leistungsverbraucher-Freigabeeinrichtung unterbunden wird. Das bedeutet, dass bei einem Abschalten des Motors sichergestellt ist, dass keine Leistungsverbraucher mehr aktiviert werden können. Die Leistungsverbraucher werden in den Modus "nicht freigeben" geschaltet, wobei auch alle Ventile o.ä. entsprechend angesteuert werden. Damit wird der Tatsache Rechnung getragen, dass keine Motorleistung mehr zur Verfügung steht.

Es kann eine Abschalt-Zähleinrichtung vorgesehen sein, zum Zählen der durch das Abschaltsignal bedingten Abschaltungen. Weiterhin kann eine Abschalt-Zeitmesseinrichtung vorgesehen sein, zum Messen eines Abschalt-Zeitraums, während dem nach Vorliegen des Abschaltsignals der Motor abgeschaltet ist. Schließlich kann eine Abschalt-Auswerteeinrichtung vorgesehen sein, zum Auswerten der Anzahl der Abschaltungen und der Abschalt-Zeiträume. Damit ist es möglich, eine mehrmalige Abschaltung des Motors hintereinander zu verhindern. Die Abschalt-Auswerteeinrichtung überprüft die Anzahl der Abschaltungen während des Abschalt-Zeitraums. Wenn eine zu große Häufigkeit von Abschaltungen festgestellt wird, verhindert die Abschalt-Auswerteeinrichtung über die Abschaltsteuerung das Erzeugen des Abschaltsignals.

Die Abschaltsteuerung kann ausgebildet sein zum Erzeugen des Abschaltsignals, wenn die Abschaltbedingung erfüllt ist und wenn ein ab der Erfüllung der Abschaltbedingung laufender, vorgegebener Vorwarnzeitraum verstrichen ist. Das bedeutet, dass das Abschaltsignal nicht unmittelbar dann erzeugt wird, wenn die Abschaltbedingung erfüllt ist, sondern erst, wenn darüber hinaus nach der Erfüllung der Abschaltbedingung ein zusätzlicher Vorwarnzeitraum verstrichen ist. Die Abschaltsteuerung stellt somit fest, wenn die Abschaltbedingung erfüllt ist und löst damit den Vorwarnzeitraum aus. Erst nach Verstreichen des Vorwarnzeitraums kann die Abschaltsteuerung das Abschaltsignal erzeugen, woraufhin der Motor abgeschaltet wird.

Der Vorwarnzeitraum kann in geeigneter Weise definiert werden und zum Beispiel ein bis drei Minuten betragen.

Dazu kann eine Warninformations-Einrichtung vorgesehen sein, zum Ausgeben einer Warninformation für einen Bediener vor einer bevorstehenden Abschaltung des Motors, wobei die Warninformation durch die Warninformations-Einrichtung bei Erfüllung der Abschaltbedingung, jedoch noch vor Ablauf der Vorwarnzeit ausgebbar ist. Der Bediener erhält somit noch vor der Abschaltung des Motors durch die Warninformations-Einrichtung die Information, dass der Motor demnächst abgeschaltet werden soll. Während der dann laufenden Vorwarnzeit hat der Bediener die Möglichkeit, durch eine entsprechende Betätigung des Fahrzeugs eine Aktivität zu bewirken, die wiederum von der Abschaltsteuerung erfasst wird und zu einer Nichterfüllung der Abschaltbedingung führt. Folglich wird dann der Motor nicht abgeschaltet.

Die Warninformation kann den Bediener über eine optische Anzeige (z.B. Display, Warnlampe etc.) oder eine akustische Anzeige (z.B. Signalton) übermittelt werden. Wird dann zum Beispiel während der Displayanzeige das Fahrpedal betätigt oder eine hydraulische Last abgenommen, also eine Funktion betätigt, wird die Leerlaufabschaltung nicht durchgeführt. Die Abschaltbedingung muss nachfolgend erneut erfüllt werden, um eine Abschaltung zu ermöglichen.

Die Abschaltsteuerung kann derart ausgebildet sein, dass bei Nichterfüllung der Abschaltbedingung kein Abschaltsignal an den Motor geführt wird. Dementsprechend soll die Abschaltsteuerung sicherstellen, dass jederzeit überprüft wird, ob die Abschaltbedingung noch vorliegt. Sobald während eines Zeitraums die Abschaltbedingung nicht mehr vorliegt, muss der Prozess von Neuem beginnen, bevor der Motor schließlich durch Erzeugen des Abschaltsignals abgeschaltet werden kann. Dies gilt insbesondere für die Phasen während der Vorwarnzeit, so dass der Bediener durch eine Aktivität ein Abschalten des Motors verhindern kann.

Es wird ein Leerlauf-Abschaltverfahren für ein Arbeitsfahrzeug angegeben, mit den Schritten:
- Überwachen von Inaktivitätszuständen des Arbeitsfahrzeugs, nämlich Stillstand des Fahrzeugs während eines vorgegebenen Inaktivitätszeitraums sowie Stellung des Fahrpedals in einer Ausgangsstellung während eines Inaktivitätszeitraums;
- Abschalten eines Motors des Arbeitsfahrzeugs, wenn beide Inaktivitätszustände vorliegen.

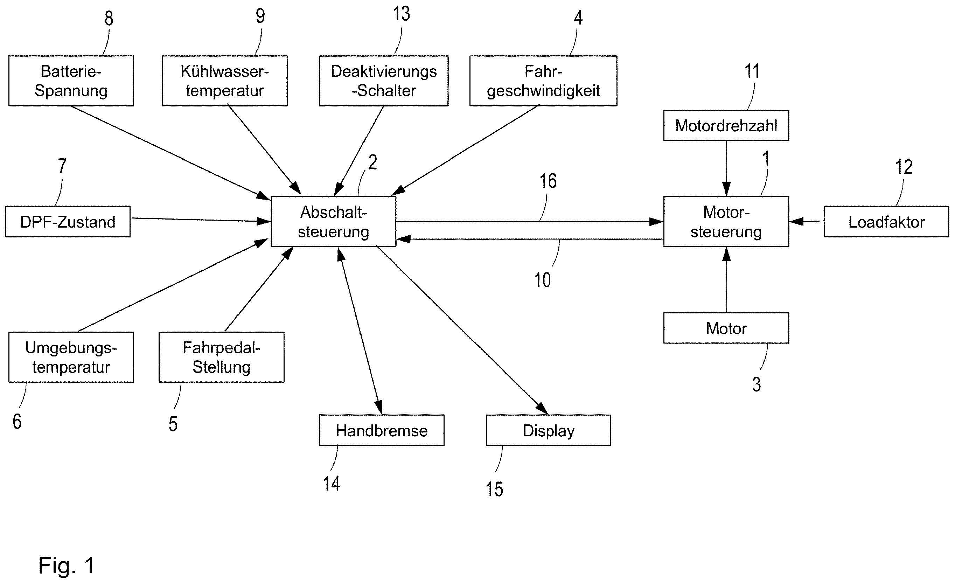

Diese und weitere Vorteile und Merkmale der Erfindung werden nachfolgend anhand eines Beispiels unter Zuhilfenahme der Figuren näher erläutert. Es zeigt
- **Fig. 1**: in schematischer Weise den Aufbau eines Steuersystems für eine Leerlauf-Abschaltautomatik eines Arbeitsfahrzeugs.

Fig. 1 zeigt eine Leerlauf-Abschaltvorrichtung für ein Arbeitsfahrzeug, wie zum Beispiel einen Dumper, einen Radlader, einen Bagger o.ä.

Die Abschaltvorrichtung weist eine Motorsteuerung 1, zum Beispiel ein an sich bekanntes Motorsteuergerät, sowie eine Abschaltsteuerung 2 auf. Die Motorsteuerung 1 steuert einen Motor 3, insbesondere einen Dieselmotor in an sich bekannter Weise an. Der Motor 3 wiederum betreibt zum Beispiel einen Hydraulikkreislauf über eine Hydraulikpumpe. Die Motorsteuerung 1 kann als elektronische Steuerung ausgebildet sein. Alternativ kann die Motorsteuerung 1 aber auch als mechanische Steuerung ausgebildet sein und z.B. lediglich einen elektrischen Schalter ausweisen, der die Zündung und/oder die Treibstoffzufuhr schaltet.

In dem in Fig. 1 nicht dargestellten Hydraulikkreislauf können in bekannter Weise Leistungsverbraucher zugeschaltet werden. Ein wesentlicher Verbraucher kann zum Beispiel der Fahrantrieb sein, der mehrere Hydromotoren aufweisen kann, die den jeweiligen Rädern des Arbeitsfahrzeugs zugeordnet sind. Über geeignete Ansteuerung der Hydromotoren kann die Fahrbewegung (vorwärts, rückwärts) oder Lenkbewegung (links, rechts) gesteuert werden.

Der Fahrantrieb kann auch mechanisch aufgebaut sein, so dass der Motor 3 eine nicht dargestellte Getriebeeinrichtung antreibt, so dass die Motorleistung über Getriebestufen, Zwischenwellen etc. auf die Räder des Fahrzeugs übertragen wird.

Ebenso kann in dem Hydraulikkreislauf als Verbraucher eine Arbeitsvorrichtung vorgesehen sein. Dies kann zum Beispiel eine Hebevorrichtung zum Anheben einer Mulde in einem Dumper sein. Ebenso können ein Hebearm, eine Schaufel, ein Löffel etc. als Leistungsverbraucher in bekannter Weise dienen.

Die mit der Motorsteuerung 1 gekoppelte Abschaltsteuerung 2 wertet verschiedene Informationen aus, die ihr über entsprechende Sensoren, Aufnehmer oder in anderer Weise übermittelt werden. Diese Informationen betreffen verschiedene Parameter, nämlich z.B. eine Fahrgeschwindigkeit 4, eine Fahrpedalstellung 5, eine Außen- bzw. Umgebungstemperatur 6, ein sogenannter DPF-Zustand 7 (Regenerationsmodus für die Regeneration des Abgaspartikelfilters), eine Batteriespannung 8, eine Kühlwassertemperatur 9.

Weitere Informationen werden von der Motorsteuerung 1 erfasst und von dieser über ein Informationssignal 10 an die Abschaltsteuerung 2 geliefert. Dies betrifft Information über die Motordrehzahl 11 sowie den sogenannten Loadfaktor 12, der ein Kriterium für die Last ist, die auf den Motor wirkt, bevor der eigentliche Arbeitsverbraucher zugeschaltet wird. Denn auch im Normalbetrieb, ohne Aktivierung des Fahrbetriebs oder des Arbeitsbetriebs, liegt eine Last am Motor an, die zum Beispiel durch den Betrieb der Lüftung, Klimaanlage, Aufladung der Batterie (Lichtmaschine) oder ein noch kaltes und damit zähflüssiges Hydrauliköl bedingt ist. Die sich dadurch ergebende Belastung des Motors 3 kann in dem Loadfaktor 12 zusammengefasst werden. Sofern die Motorsteuerung nicht als elektronische Steuerung ausgebildet ist, können die vorgenannten Informationen auch direkt von den jeweiligen Sensoren an die Abschaltsteuerung übertragen werden.

Die Abschaltsteuerung 2 kann weiterhin mit einem Deaktivierungs-Schalter 13 zum Deaktivieren der nachfolgend noch erläuterten automatischen Abschaltfunktion dient gekoppelt sein. Wenn der Bediener den Schalter 13 betätigt hat, wird die automatische Abschaltfunktion außer Betrieb gesetzt.

Weiterhin ist die Abschaltsteuerung 2 mit einer Handbremse 14 gekoppelt. Zum einen erhält die Abschaltsteuerung 2 eine Information von der Handbremse 14, ob diese eingelegt ist oder nicht. Zum anderen kann optional eingerichtet werden, dass die Abschaltsteuerung 2 aktiv die Handbremse 14 betätigen, also aktivieren kann.

Weiterhin ist ein Display 15 mit der Abschaltsteuerung 2 gekoppelt, um dem Bediener eine Information darüber zu übermitteln, ob eine automatische Abschaltung des Motors bevorsteht.

Im Betrieb werden der Abschaltsteuerung 2 die entsprechenden Informationen zugeführt und von der Abschaltsteuerung 2 ausgewertet. Insbesondere überprüft die Abschaltsteuerung 2, ob bestimmte Einzelbedingungen erfüllt sind. Wenn - je nach Auslegung der Abschaltvorrichtung - entsprechende Einzelbedingungen erfüllt sind, stellt die Abschaltsteuerung 2 fest, dass eine Abschaltbedingung erfüllt ist und gibt ein entsprechendes Abschaltsignal 16 an die Motorsteuerung 1, die ihrerseits ein Abschalten des Motors 3 bewirkt. Alternativ kann das Abschaltsignal auch an ein aktives Element, wie z.B. an einen Aktor oder ein Treibstoffventil übermittelt werden, welches dann den Motor stoppt.

Die Abschaltbedingung gilt insbesondere dann als erfüllt, wenn ein Stillstand des Arbeitsfahrzeugs während eines bestimmten Inaktivitätszeitraums festgestellt wird und wenn sich - ebenfalls über einen bestimmten Inaktivitätszeitraum - die Fahrpedalstellung 5 in einer Ausgangsstellung befindet. In diesem Fall geht die Abschaltsteuerung 2 davon aus, dass das Fahrzeug bereits längere Zeit stillsteht und aufgrund der fehlenden Betätigung des Fahrpedals auch nicht bewegt werden soll. Daraus zieht die Abschaltsteuerung 2 den Schluss, dass die Abschaltbedingung erfüllt ist und gibt das Abschaltsignal 16 an die Motorsteuerung 1.

Auch weitere Kriterien können für die Feststellung des Vorliegens der Abschaltbedingung herangezogen werden und in Form von Einzelbedingungen durch die Abschaltsteuerung 2 ausgewertet werden.

So kann zum Beispiel die Motordrehzahl (Leerlaufdrehzahl) erfasst und ausgewertet werden. Wenn die Motordrehzahl unterhalb eines bestimmten Grenzwertes liegt, wird dies als Kriterium dafür genommen, dass das Arbeitsfahrzeug derzeit nicht genutzt wird.

Weiteres Kriterium kann es sein, wenn der Loadfaktor 12 unterhalb eines bestimmten Grenzwerts liegt.

Weitere Einzelbedingungen können sein, dass die Kühlwassertemperatur 9 oder die Außentemperatur 6 über jeweiligen Grenzwerten liegen.

Ebenso kann es erforderlich sein, dass sich aus dem DPF-Zustand 7 ergibt, dass sich der Motor nicht im Regenerationsmodus für das Partikelfilter befindet. Auch die Batteriespannung 8 kann ausgewertet werden. Sie muss über einen gemessenen Zeitraum über einem bestimmten Wert liegen.

Insbesondere dann, wenn die Handbremse 14 nicht aktiv durch die Abschaltsteuerung 2 eingelegt werden kann, kann es sinnvoll sein, festzustellen, dass die Handbremse 14 bereits vom Bediener eingelegt wurde.

Ebenso kann durch die Abschaltsteuerung 2 die Anzahl der automatischen Abschaltvorgänge erfasst und ausgewertet werden, um ein mehrmaliges Abschalten hintereinander in einem kurzen Zeitraum zu unterbinden.

Mit der Abschaltvorrichtung ist es möglich, anhand vorbestimmter Kriterien (Einzelbedingungen) zu erkennen, ob das Arbeitsfahrzeug derzeit genutzt bzw. ein Laufenlassen des Motors sinnvoll ist, oder ob es sinnvoller sein kann, den Motor abzuschalten. Die Abschaltsteuerung 2 wertet die Einzelbedingungen aus und liefert bei Vorliegen der die Einzelbedingungen zusammenfassenden Abschaltbedingung das Abschaltsignal 16 an die Motorsteuerung 1.

## Patentansprüche

1. Arbeitsfahrzeug, mit
- einem Motor (3) zum Antreiben eines Hydraulikkreislaufs mit wenigstens einem zuschaltbaren Leistungsverbraucher;
- einer Motorsteuerung (1) zum Steuern des Motors (3); und mit
- einer Abschaltsteuerung (2),
wobei
- die Abschaltsteuerung (2) ausgebildet ist zum Erzeugen eines Abschaltsignals (16), wenn eine Abschaltbedingung erfüllt ist, und zum Führen des Abschaltsignals (16) an die Motorsteuerung (1), zum Abschalten des Motors (3); und wobei
- die Abschaltbedingung erfüllt ist, wenn die folgenden Einzelbedingungen erfüllt sind:
+ Stillstand des Arbeitsfahrzeugs während eines vorgegebenen Inaktivitätszeitraums; und
+ Stellung des Fahrpedals in einer Ausgangsstellung während eines Inaktivitätszeitraums.

2. Arbeitsfahrzeug nach Anspruch 1, wobei zum Erfüllen der Abschaltbedingung zusätzlich wenigstens eine weitere der folgenden Einzelbedingungen erfüllt sein muss:
- Motordrehzahl gleich oder unterhalb einer vorgegebenen Leerlaufdrehzahl;
- hydraulische Last im Hydraulikkreislauf liegt unterhalb eines vorgebbaren Grenzwertes;
- keine hydraulische Last bzw. kein Leistungsverbraucher im Hydraulikreislauf zugeschaltet;
- Kühlwassertemperatur des Motors liegt oberhalb eines vorgegebenen Grenzwertes;
- Umgebungstemperatur liegt oberhalb eines vorgegebenen Grenzwertes;
- Motor befindet sich nicht in einem Regenerationsmodus für ein Abgas-Partikelfilter;
- Batteriespannung einer Starterbatterie für den Motor liegt während eines vorgegebenen Zeitraumes oberhalb eines vorgegebenen Grenzwertes;
- eine von einem Bediener betätigbare Handbremse ist eingelegt;
- das Fahrpedal ist nicht betätigt;
- die Anzahl der automatischen Abschaltungen des Motors innerhalb eines vorgegebenen Zeitraums liegt unterhalb einer vorgegebenen Grenze.

3. Arbeitsfahrzeug nach einem der vorstehenden Ansprüche, wobei das Vorliegen des Abschaltsignals (16) und das Abschalten des Motors (3) keine Wirkung auf wenigstens eine der folgenden Einrichtungen hat:
- Drehlichteinrichtung;
- Standlichteinrichtung;
- Akustische Signaleinrichtung;
- Warnblinkeinrichtung.

4. Arbeitsfahrzeug nach einem der vorstehenden Ansprüche, wobei eine Deaktivierungseinrichtung (13) vorgesehen ist, zum Unterbrechen oder Verhindern des Abschaltsignals (16) auch dann, wenn die Abschaltbedingung erfüllt ist.

5. Arbeitsfahrzeug nach einem der vorstehenden Ansprüche, wobei
- eine Parkbremseinrichtung (13) vorgesehen ist, zum Bremsen des Arbeitsfahrzeugs im Stillstand; und wobei
- die Abschaltsteuerung (2) ausgebildet ist, um bei Erfüllung der Abschaltbedingung die Parkbremseinrichtung automatisch zu aktivieren.

6. Arbeitsfahrzeug nach einem der vorstehenden Ansprüche, wobei
- eine Leistungsverbraucher-Freigabeeinrichtung vorgesehen ist, zum Freigeben einer Aktivierung des Leistungsverbrauchers; und wobei
- bei Erfüllung der Abschaltbedingung ein Freigeben der Aktivierung des Leistungsverbrauchers durch die Leistungsverbraucher-Freigabeeinrichtung unterbunden ist.

7. Arbeitsfahrzeug nach einem der vorstehenden Ansprüche, wobei
- eine Abschalt-Zähleinrichtung vorgesehen ist, zum Zählen der durch das Abschaltsignal (16) bedingten Abschaltungen;
- eine Abschalt-Zeitmesseinrichtung vorgesehen ist, zum Messen eines Abschalt-Zeitraums, während dem nach Vorliegen des Abschaltsignals (16) der Motor (3) abgeschaltet ist; und wobei
- eine Abschalt-Auswerteeinrichtung vorgesehen ist, zum Auswerten der Anzahl der Abschaltungen und der Abschalt-Zeiträume.

8. Arbeitsfahrzeug nach einem der vorstehenden Ansprüche, wobei die Abschaltsteuerung (2) ausgebildet ist, zum Erzeugen des Abschaltsignals (16), wenn die Abschaltbedingung erfüllt ist und wenn ein ab der Erfüllung der Abschaltbedingung laufender, vorgegebener Vorwarnzeitraum verstrichen ist.

9. Arbeitsfahrzeug nach einem der vorstehenden Ansprüche, wobei
- eine Warninformations-Einrichtung (14) vorgesehen ist, zum Ausgeben einer Warninformation für einen Bediener vor einer bevorstehenden Abschaltung des Motors (3); und wobei
- die Warninformation durch die Warninformations-Einrichtung (14) bei Erfüllung der Abschaltbedingung, jedoch noch vor Ablauf der Vorwarnzeit ausgebbar ist.

10. Arbeitsfahrzeug nach einem der vorstehenden Ansprüche, wobei die Abschaltsteuerung (2) derart ausgebildet ist, dass bei Nichterfüllung der Abschaltbedingung kein Abschaltsignal (16) an den Motor (3) geführt wird.

11. Leerlauf-Abschaltverfahren für ein Arbeitsfahrzeug, mit den Schritten:
- Überwachen von Inaktivitätszuständen des Arbeitsfahrzeugs, nämlich
+ Stillstand des Arbeitsfahrzeugs während eines vorgegebenen Inaktivitätszeitraums; und
+ Stellung des Fahrpedals in einer Ausgangsstellung während eines Inaktivitätszeitraums;
- Abschalten eines Motors des Arbeitsfahrzeugs, wenn beide Inaktivitätszustände vorliegen.
